# EUROPEAN PATENT APPLICATION

(11) **EP 3 501 781 A1**
(43) Date of publication of application: **26.06.2019**
(21) Application number: 17210143.8
(22) Date of filing: 22.12.2017
(51) Int. Cl.: B29C 45/14, B29C 45/26, B29C 33/02, B29C 45/72, B29C 33/30, B60J 10/70, B29C 33/42, B29C 45/37

(54) **MOLD TO OVERMOLD A PLASTIC MATERIAL TO AT LEAST A PORTION OF THE PERIPHERY OF A GLAZING PANEL**

(71) Applicant: AGC Glass Europe, 1348 Louvain-La-Neuve (BE)
(72) Inventor: DELNEUFCOURT, Sébastien, 1348 Louvain-La-Neuve (BE); LEMOINE, Adrien, 1490 Court-Saint-Etienne (BE)
(74) Representative: Chabou, Samia

(57) **Abstract**

The invention relates to an improved mold to encapsulate a plastic material to at least a portion of the periphery of a glazing panel comprising an upper mold which comprises a body and a molding surface; a lower mold which comprises a body and a molding surface; a cavity formed when the mold is closed between molding surfaces and the glazing panel.

The invention relates also to a method to encapsulate a plastic material as a profiled joint to at least a portion of the periphery of a glazing panel and to a glazing panel comprising on a portion of its periphery at least a profiled joint obtained by the method

## Description

### Technical Domain of the Invention

The present invention relates to a mold to overmold a plastic material to at least a portion of the periphery of a glazing panel. More particularly, the present invention relates to a mold with an interchangeable molding part.

### Background of the Invention

With development of new vehicles, users have higher requirements in term of safety, comfort and aesthetics of vehicle. In order to improve the aesthetic of the vehicle and especially around glazings, different solutions are used on visible area of glazing panels, such as decorative trims, profiled joints, etc.

Glazing panels on a vehicle and in particular side windows are often made of a transparent rigid material with a profiled joint surrounding at least a portion of the periphery of the glazing panel. The profiled joint is used to add a sealing function between the glazing panel and the car body. The profiled joint is used to have an aesthetic link between the glazing panel and the car body. This glazing panel with such profiled joint is called encapsulated glazing panel.

The transparent rigid panel used in glazing panel is manufactured in flat sheets. The flat sheets are cut to size and optionally a enamel is applied, typically around the periphery of the glass. Enamel is important for decoration and exterior styling, principally to hide from view what may be positioned behind the enamel, such as, for example, attachment means for securing the glazing panel to a motor vehicle body, etc. Enamel is normally applied by a silk-screen process to the transparent rigid material. The enamel is applied to the transparent rigid material and then heated to cure the enamel and bond it to the transparent rigid material.

The transparent rigid material can be made of glass such as soda-lime glass, alumino-silicate glass,... or plastic such as polycarbonate.

Profiled joint has two main functions. First is a sealing function of the glazing panel with the car body and the second is to have an element between the car body and the substrate for finishing and aesthetic reasons.

For cost reason, the profiled joint is produced in a black color where plastic material is directly visible. The glazing panel can only be produced with some dull aspect or defects. To limit these problems, a difference of gloss can be required.

In case of a high gloss level is required, an decorative trim should be added on the module in order to ensure to get the right finishing.

The profiled joint may also incorporate inserts. These inserts are used to add rigidity to the profiled joint and/or to fix another element such as a decorative trim on it.

Encapsulated glazing panel may be fabricated as described below. First, a piece of glass is pre-processed such as by cutting, edging, cleaning and thermal treatment. Then, the glass is submitted to an encapsulation process in an encapsulation mold, including an upper mold and a lower mold. The piece of glass is placed as an insert on a chuck of the lower mold, and is fixed with a positioning device of the lower mold. Then the upper mold and the lower mold are jointed together. Through sprue gates, molten plastics are injected towards edges of the glass. An encapsulated glazing panel is obtained after the molten plastics are solidified and encapsulate the edges of the glass. Plastics are usually made of a thermoplastic materials as TPE or PVC. it is understood if any other plastics suitable for this application may be used.

To minimize surface defects, some parameters are important such as numbers and place of injection heads in the mold, the pressure and the temperature of injection of encapsulation material, ...

However, with known existing method, the profiled joint are subject to scratch or to visible defect, such as shark effect, ununiformed coloration or bubbles, even if correct parameters of molding and encapsulation are well configured.

The invention provides a solution to overcome the above described defaults and further allows to avoid to add a trim to mask thess defaults or to obtain the required aesthetic.

The following description relates to an automotive glazing panel but it is understood that the invention may be applicable to others fields like architectural glazing which may provide encapsulated plastic part.

### Summary of the Invention

The invention relates to an improved mold to encapsulate a plastic material to at least a portion of the periphery of a glazing panel comprising an upper mold which comprises a body and a molding surface; a lower mold which comprises a body and a molding surface; a cavity formed when the mold is closed between molding surfaces and the glazing panel.

The invention relates also to a method to encapsulate a plastic material as a profiled joint to at least a portion of the periphery of a glazing panel and to a glazing panel comprising on a portion of its periphery at least a profiled joint obtained by the said method.

According to the invention, to adapt to the requested design or to clean or change the molding surface, the molding surface of the upper mold comprises a interchangeable surface element maintained by at least mechanical and/or electromechanical elements to the body of the upper mold.

The glazing panel can be a transparent and rigid substrate as a glass panel, such as soda-lime glass panel or alumino-silicate glass panel, or a polycarbonate panel. The glazing panel can be pre-processed such as by cutting, edging and cleaning. The glazing panel can also receive another pre-processed such to obtain a toughened, annealed or tempered glazing panel.

The plastic material may be a thermoplastic material such as TPE or PVC. It is understood any suitable material may be used.

According to one embodiment, the glazing panel is pre-processed to obtain a laminated glazing panel means that the glazing panel comprises at least two glass sheets and an interlayer; the at least two glass sheets are maintained together by the interlayer. This embodiment allows to add sound reduction and/or security performances.

According to another embodiment and to minimize the delta of temperature between the molding surface and the plastic material to avoid the degradation and/or defect on the surface of the profiled joint formed by the plastic material, the body of the upper mold comprises a heating device and a cooling device to heat and cool at least the molding surface of the upper mold.

Preferably, to have a similar temperature in the whole surface of the profiled joint, the body of the lower part comprises a cooling device.

In another embodiment of the invention, and to have a similar effect as in the surface of the upper mold, the body of the lower part comprises a heating device.

In a particular embodiment, a heating device comprises ducts and inductors extending along a longitudinal direction in the ducts.

The inductors are placed in ducts that extend near the molding surface of at least the upper mold. These ducts can be made by drilling the body of the mold or by grooving the underside of the body of the mold at the interface between that body of the upper mold and the interchangeable surface element.

In another embodiment, the cooling device comprises ducts in which fluid can pass through. Preferably, the fluid comprises water and preferably more than 80% of water, more preferably more than 90% of water. In another embodiment, the fluid comprises oil.

The cooling device is made with conduits drilled in the body, which are further away from the molding surface. That cooling device carries out both the cooling of the body, which, in a common embodiment, is made in material that is relatively insensitive to induction heating, and the cooling of the molding surface.

In another embodiment, the interchangeable surface element is at least partially textured on his molding surface. The texturation can be made by any technical methods. The texturation is a defined and controlled texturation means that the same texturation will be applied on the profiled joint to reduce or to control the gloss or to give a specific design such as nano-texturated design such as carbon-like effect to a macro-texturated design such as crocodile skin effect, logos,.. Each texturation can have a specific effect such as reducing the reflection of the light, reducing the gloss, giving a specific gloss to have some parts brighter than others like in case of carbon-like effects, giving 3D textures to avoid water to stay on the profiled joint, to add a wind protection,...

The invention relates also a method to encapsulate a plastic material as a profiled joint to at least a portion of the periphery of a glazing panel in a mold according to the invention wherein the method comprises at least the steps of:
(a) pre-heating at least the molding surface of the upper mold;
(b) inserting the glazing between the upper mold and the lower mold;
(c) closing the upper and the lower molds to create a cavity surrounding the portion of the periphery of a glazing panel where the plastic material has to be overmold;
(d) injecting a plastic material into the cavity ;
(e) cooling at least the molding surfaceof the upper mold;
(f) extracting the glazing with the overmolded profiled joint.

Pre-heating at least the molding surface of the first part of the mold prevents the plastic material to freeze directly when it is in contact with the surface and create defects and allows to kiss precisely the whole molding surface even if the molding surface is textured. Preferably, the molding surface is heated to a temperature between 40°C and90°C and more preferably between 75°C and 80°C to obtain the good interface between the plastic and the molding surface.

Cooling at least the molding surface of the upper mold to a temperature of the surface of the encapsulation between 30°C and50°C to be able to store or manipulate easily the encapsulated glazing panel.

Plastic material is injected through sprue gate and are preferably injected at a temperature around 200°C depending of the plastic material.

### Figures

The present invention will now be more particularly described with reference to drawings and exemplary embodiments, which are provided by way of illustration and not of limitation. The drawings are a schematic representation and not true to scale. The drawings do not restrict the invention in any way. More advantages will be explained with examples.

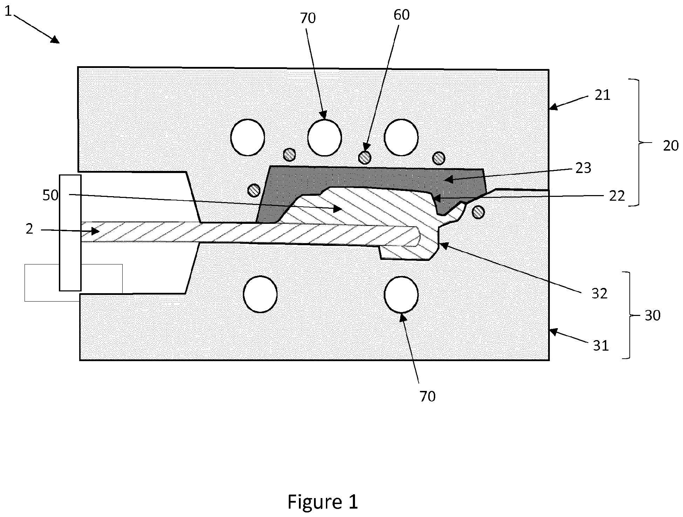

Figure 1 schematically illustrates a cross-sectional view of a part of a mold according to one embodiment of the present disclosure;

According to the invention and to the figure 1, a mold (1) to encapsulated a plastic material to at least a portion of the periphery of a glazing panel (2) comprising an upper mold (20) comprises a body (21) and a molding surface (22), a lower mold (30) comprises a body (31) a molding surface (32) and a cavity (50) formed when the mold is closed between molding surfaces (22, 32) and the glazing panel (2). The upper mold corresponds to the upper face of the glazing panel, commonly the outside surface of the glazing when the glazing panel is mounted in a vehicle and it's also the visible surface of the glazing panel.

In this embodiment, the molding surface (22) of the upper mold (20) comprises a interchangeable surface element (23) maintained by at least mechanical and/or electromechanical elements to the body (21) of the upper mold (20) such as screws, magnets,...

In this embodiment, the body (21) of the upper mold (20) comprises a heating device (60) and a cooling device (70). The lower mold comprises also a cooling device. Depending of the profile of the profiled joint, the lower mold can comprises a heating device.

In this embodiment, the heating device (60) comprises ducts drilled into the body (21) of the upper mold (20) and inductors extending along a longitudinal direction in the ducts. Inductors are made of conductive materials and are linked to a heat generator.

In this embodiment, the cooling device comprises ducts in which the fluid is passing through. The temperature of the fluid is given by the temperature wanted at the surface of the profiled joint. In this embodiment, the fluid is water.

In another embodiment, the mold is similar to the first embodiment but interchangeable surface element (24) is at least partially textured to give a predetermined textured to the profiled joint formed on the glazing panel.

## Claims

1. A mold (1) to encapsulate a plastic material to at least a portion of the periphery of a glazing panel (2) comprising:
- an upper mold (20) which comprises a body (21) and a molding surface (22);
- a lower mold (30) which comprises a body (31) a molding surface (32);
- a cavity (50) formed when the mold is closed between molding surfaces (22, 32) and the glazing panel (2);
**characterized in that** the molding surface (22) of the upper mold (20) comprises an interchangeable surface element (23) maintained by at least a mechanical and/or an electromechanical elements to the body (21) of the upper mold (20).

2. Mold (1) according to claim 1 **characterized in that** the body (21) of the upper mold (20) comprises a heating device (60) and a cooling device (70).

3. Mold (1) according to any preceding claims **characterized in that** the body of the lower part comprises a cooling device (70).

4. Mold (1) according to any preceding claims **characterized in that** the body of the lower part comprises a heating device (60).

5. Mold (1) according to claim 2 or 4 **characterized in that** a heating device (60) comprises ducts and inductors extending along a longitudinal direction in the ducts.

6. Mold according to claim 2 or 3 **characterized in that** the cooling device (70) comprises ducts in which fluid can pass through.

7. Mold according to claim 6 **characterized in that** the fluid comprises water, and preferably more than 80% of water, more preferably more than 90% of water.

8. Mold (1) according to any preceding claims **characterized in that** the interchangeable surface element (24) is at least partially textured on his molding surface (22).

9. Method to encapsulate a plastic material as a profiled joint to at least a portion of the periphery of a glazing panel (2) in a mold (1) according to claims 1 to 6 wherein the method comprises at least the steps of
(a) pre-heating at least the molding surface (22) of the upper mold (21);
(b) inserting the glazing between the upper mold (20) and the lower mold (30);
(c) closing the upper (20) and the lower (30) molds to create a cavity (50) surrounding the portion of the periphery of a glazing panel (2) where the plastic material has to be overmold;
(d) injecting a plastic material into the cavity (50);
(e) cooling at least the molding surface (22) of the upper mold (20);
(f) extracting the glazing with the overmolded profiled joint.

10. Method according to claim 9 **characterized in that** the step (e) comprises the cooling of the molding surface (32) of the lower mold (30).

11. Method according to claims 9 or 10 **characterized in that** the step (a) comprises the pre-heating of the molding surface (32) of the lower mold (30).

12. Glazing panel (2) comprising on a portion of its periphery at least a profiled joint obtained by the method according to claims 9 to 11.

13. Glazing panel (2) according claim 12 **characterized in that** the glazing panel comprises at least two glass sheets maintained together by a thermoplastic interlayer.
